(19) Europäisches Patentamt / European Patent Office / Office européen des brevets

(11) **EP 2 726 244 B1**

(12) **EUROPÄISCHE PATENTSCHRIFT**

(45) Veröffentlichungstag und Bekanntmachung des Hinweises auf die Patenterteilung:
**02.03.2016   Patentblatt 2016/09**

(21) Anmeldenummer: **12723433.4**

(22) Anmeldetag: **16.05.2012**

(51) Int Cl.:
*B23K 26/03* (2006.01)      *B23K 26/32* (2014.01)
*G01N 25/72* (2006.01)      *B23K 26/24* (2014.01)

(86) Internationale Anmeldenummer:
**PCT/EP2012/059158**

(87) Internationale Veröffentlichungsnummer:
**WO 2013/000622 (03.01.2013 Gazette 2013/01)**

(54) **VERFAHREN ZUM ERKENNEN VON FEHLERN AN EINER NICHT LINEAREN SCHWEISSNAHT BZW. EINEM NICHT LINEAREN SCHNITTSPALT WÄHREND EINES LASER-BEARBEITUNGSPROZESSES SOWIE ENTSPRECHENDE LASER-BEARBEITUNGSVORRICHTUNG**

METHOD OF DETECTING DEFECTS IN A NON-LINEAR WELD SEAM OR A NON-LINEAR CUTTING GAP DURING A LASER-MACHINING PROCESS ; CORRESPONDING LASER-MACHINING DEVICE

PROCÉDÉ DE DÉTECTION DE DÉFAUTS SUR UNE SOUDURE NON-LINÉAIRE OU UNE FENTE DE COUPE NON-LINÉAIRE AU COURS D'UN PROCESSUS D'USINAGE PAR LASER ; DISPOSITIF D'USINAGE PAR LASER CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2011   DE 102011078276**

(43) Veröffentlichungstag der Anmeldung:
**07.05.2014   Patentblatt 2014/19**

(73) Patentinhaber: **Trumpf Laser- und Systemtechnik GmbH**
**71254 Ditzingen (DE)**

(72) Erfinder:
• **PFITZNER, Dieter**
**75382 Althengstett (DE)**

• **BRAUN, Holger**
**71254 Ditzingen (DE)**
• **DORSCH, Friedhelm**
**70499 Stuttgart (DE)**

(74) Vertreter: **Kohler Schmid Möbus Patentanwälte Partnerschaftsgesellschaft mbB**
**Ruppmannstraße 27**
**70565 Stuttgart (DE)**

(56) Entgegenhaltungen:
**WO-A1-00/29166          WO-A1-2008/145237**
**DE-A1-102009 050 784**

**Beschreibung**

Die vorliegende Erfindung betrifft ein Verfahren zum Erkennen von Fehlern während eines Laser-Bearbeitungsprozesses sowie eine Laser-Bearbeitungsvorrichtung gemäß dem Oberbegriff der Ansprüche 1 und 10 (siehe, z.B., WO 2008/145 237 A).

Bei der Laserbearbeitung von Werkstücken werden Prozessüberwachungsvorrichtungen eingesetzt, um Fehler während des Prozesses zu erkennen. So kann es beispielsweise beim Laserschweißen von Werkstücken zu Bindefehlern der Schweißnaht kommen, bei denen zwischen den miteinander verschweißten Werkstücken lokal keine materialschlüssige Anbindung besteht. Da die Schweißnaht bei solchen Bindefehlern von außen betrachtet fehlerfrei aussieht, müssen in der Regel indirekte Beurteilungsgrößen zum eindeutigen Erkennen dieser Schweißnahtfehler herangezogen werden.

In der WO 2008/145237 A1 wird diesbezüglich ein Verfahren offenbart, bei dem ein koaxial zum Laserstrahl ausgerichteter Detektor eingesetzt wird, um eine werkstückseitig emittierte Strahlung im Detektionsfeld der Sensorik zweidimensional ortsaufgelöst zu detektieren. Die Schweißnahtfehler werden durch Auswerten der zuvor detektierten Strahlung im Bereich einer sich an ein flüssiges Schmelzbad anschließenden, erstarrten Schmelze und/oder im Bereich des flüssigen Schmelzbads der Schweißnaht erkannt. Bei diesem Verfahren wird eine lineare Schweißnaht geschweißt, so dass der der Brennfleck des Laserstrahls und die erzeugte Schweißnaht eine feste, bekannte (mittige) Lage im werkstückseitigen Detektionsfeld der Kamera, d.h. dessen werkstückseitigen Bilderfassungsbereich, aufweisen. Der lineare Schweißnahtverlauf ermöglicht eine einfache Auswertung des Kamerabilds, da nur eingeschränkte Bildbereiche an zuvor festgelegten, immer gleichen Stellen im Bild ausgewertet werden müssen.

In der Praxis werden bei Laserbearbeitungsprozessen jedoch auch Schnitte oder Schweißnähte mit frei programmierbarer, z.B. kurviger Form erzeugt.

Beim Schneiden oder Schweißen einer beliebig geformten Bahn ist die Lage des Schnittspalts, des Schmelzbads und der Naht im Kamerabild für die Bildauswertung nicht vorhersehbar, da sie von der Vorschubrichtung des Bearbeitungskopfs abhängt. Aus diesem Grund muss zum Erkennen von Fehlern jeweils das gesamte Detektionsfeld des Photodetektors ausgewertet werden, um die Lage des Spalts oder der Schweißnaht sicher zu detektieren. Dies ist angesichts der in der Praxis erforderlichen optischen und zeitlichen Auflösung (Bildwiederholrate) der eingesetzten Detektoren extrem komplex, rechen- und zeitaufwändig. Diese Problematik wird zudem bei einer in der Praxis üblichen überlagerten Bewegung des Bearbeitungskopfs und einer darin angeordneten Scanneroptik gegenüber den zu bearbeitenden Werkstücken (beispielsweise beim Remote Laser Welding), nochmals weiter erschwert.

Aus der DE 10 2008 062 866 A1 ist ein Verfahren zum Erkennen von Fehlern an einer Schweißnaht bekannt geworden, die im Wege des vorgenannten Laserscanner-Schweißprozesses erzeugt wurde. Nach dem Fertigstellen der Schweißnaht wird dort eine werkstückseitig emittierte Wärmestrahlung mit einer in der oben beschriebenen Weise zum Laserstrahl koaxial ausgerichteten Kamera detektiert und Fehler an der Schweißnaht werden anhand einer Auswertung der detektierten Wärmestrahlung erkannt. Bei diesem Verfahren kann bei Feststellen eines Fehlers an der Schweißnaht nicht mehr regelnd in den Schweißprozess eingegriffen werden. Darüber hinaus muss der Laserschweißprozess für die Überprüfung der Schweißnaht jeweils unterbrochen werden, was unter Zeit- und Kostenaspekten wenig vorteilhaft ist.

Die DE 10 2007 025 463 A1 offenbart ein Laserscanner-Lötverfahren, bei dem zur Überwachung des Lötprozesses ebenfalls eine koaxial zum Laserstrahl ausgerichtete Kamera im Detektionsstrahlengang des Scankopfs angeordnet ist. Die punktuelle Laserbearbeitung der Werkstücke erfolgt in schneller Abfolge an mehreren Bearbeitungspositionen der Werkstücke. Um eine quasi-Echtzeit-Überwachung des Bearbeitungsprozesses an den einzelnen Bearbeitungspunkten zu ermöglichen, werden die Bildaufnahmen der Kamera jeweils über das Ansteuersignal des Scanners getriggert. Die einzelnen Bildaufnahmen werden dann den jeweilig unterschiedlichen Bearbeitungssequenzen zugeordnet, so dass sich je eine Bildsequenz pro Bearbeitungspunkt ergibt. Diese Sequenzen können nachfolgend getrennt ausgewertet werden.

Ein Verfahren zur Echtzeitüberwachung eines Laserscanner-Bearbeitungsprozesses ist aus der DE 10 2007 024 510 B3 bekannt geworden, bei dem mittels eines Laserstrahls eine Sollbruchlinie in ein Werkstück eingebracht wird. Auf einer dem Laserstrahl abgewandten Seite des Werkstücks wird der jeweilige Bearbeitungsbereich, d.h. der entlang einer vorgegebenen Bearbeitungsbahn in das Werkstück einzubringenden Sollbruchstellen, durch eine ortsfeste Matrixkamera erfasst. Zur Überwachung des Laserbearbeitungsprozesses werden nur vorbekannte Pixel des CMOS-Detektors der Matrixkamera ausgelesen und ausgewertet, für die das Auftreffen einer Messstrahlung erwartet wird. Dadurch kann ein für die Auswertung der detektierten Strahlung erforderlicher Rechen- und Zeitaufwand reduziert werden. Dieses Verfahren ist aufgrund des räumlich stationären und nicht koaxial zum Laserstrahl ausgerichteten Detektors wenig flexibel einsetzbar. So scheidet ein Einsatz der stationär angeordneten Messsensorik insbesondere bei robotikgestützten Remote-Laserschweißprozessen, etwa an Karosserien für Personenkraftwagen, aus.

Aufgabe der Erfindung

Es ist die Aufgabe der vorliegenden Erfindung, ein Verfahren zum Erkennen von Fehlern an einer frei programmierbaren, beliebig geformten Schweißnaht oder einem beliebig geformten Schnittspalt während eines Laserbearbeitungsprozesses sowie eine Laserbearbeitungsvorrichtung bereitzustellen, die die Nachteile des Standes der Technik überwinden, insbesondere ein schnelleres, einfacheres und dabei zuverlässiges Erkennen von Fehlern an der nichtlinearen Schweißnaht bzw. dem nicht- linearen Schnittspalt erlauben.

Gegenstand der Erfindung

Die das Verfahren betreffende Aufgabe wird erfindungsgemäß durch ein Verfahren mit den in Patentanspruch 1 angegebenen Merkmalen und die die Bearbeitungsvorrichtung betreffende Aufgabe durch eine Bearbeitungsvorrichtung mit den in Patentanspruch 7 angegebenen Merkmalen gelöst.

Weitere Vorteile und vorteilhafte Ausgestaltungen des Gegenstands der Erfindung ergeben sich aus der Beschreibung, den Ansprüchen und den Zeichnungen.

Bei dem erfindungsgemäßen Verfahren zum Erkennen von Fehlern wird eine werkstückseitig emittierte Strahlung und/oder eine Strahlung, die von einer Beleuchtungsvorrichtung auf das Werkstück gerichtet und dort reflektiert wird, in an sich bekannter Weise mittels eines Detektors detektiert. Der Detektor ist in oder an dem Bearbeitungskopf der Bearbeitungsvorrichtung angeordnet. Erfindungsgemäß wird zumindest ein Detektionsfeldausschnitt im Detektionsfeld des Detektors als Prüfbereich anhand von Steuerdaten zum Steuern der Bewegung des Laserstrahls entlang der Bearbeitungsbahn, also anhand von Soll-Positionsdaten des Laserstrahls, oder anhand von zuvor ermittelten Ist-Positionsdaten des Laserstrahls entlang der Schweiß- oder Schneidbahn ausgewählt. Nur in diesem Detektionsfeldausschnitt erfolgt die Auswertung der Detektormesswerte. Die Soll-Positionsdaten bzw. die Ist-Positionsdaten geben Aufschluss über die vorgegebene Bahn, entlang derer der Laserstrahl über die zu bearbeitenden Werkstücke bewegt wird. Der Verlauf der Bahnkurve wird also als Vorwissen für die Auswertung der Detektordaten genutzt.

Die Soll-Positionsdaten des Laserstrahls werden vorzugsweise aus den Steuerdaten für die Verschwenkbewegung zumindest eines in einem Scanner-Bearbeitungskopf angeordneten Ablenkmittels, beispielsweise Scannerspiegels, um dessen Schwenkachse ermittelt. Bei einem Bearbeitungskopf ohne Scanneroptik leiten sich die Soll-Positionsdaten des Laserstrahls aus den Steuerdaten zum Steuern einer Relativbewegung des Bearbeitungskopfs zu den Werkstücken ab. Bei einer überlagerten Bewegung des Bearbeitungskopfs und der Scanneroptik ergeben sich die Soll-Positionsdaten des Laserstrahls aus einer Kombination der Steuerdaten der Scanneroptik und des Bearbeitungskopfs.

Für die Ermittlung der Ist-Positionsdaten des Laserstrahls während der Bearbeitung können insbesondere Positionsdaten des im Bearbeitungskopf angeordneten Strahl-Ablenkmittels um dessen Schwenkachsen (z.B. dessen jeweiliger Verschwenkwinkel) bzw. Geschwindigkeitsmesswerte/-vektoren zu einer Verschwenkbewegung des Ablenkmittels um dessen Schwenkachsen verwendet werden. Alternativ oder zusätzlich können die Positionskoordinaten und/oder Geschwindigkeitsvektoren des Bearbeitungskopfs entlang/um dessen Bewegungsachsen einbezogen werden.

Aufgrund dieser Informationen können die als Prüfbereiche ausgewählten Detektionsfeldausschnitte trotz der stetig wechselnden Lage und Orientierung der Schweißnaht bzw. des Schnittspalts innerhalb des Detektionsfelds zuverlässig im Detektionsfeld definiert werden. Der Detektionsfeldausschnitt kann auf diese Weise mit dem vorauseilenden Laserbrennfleck des Laserstrahls synchronisiert mitgeführt werden. So können die Schweißnaht oder der Schnittspalt während ihres Entstehens an den immer gleichen Bahnabschnitten relativ zum über die Werkstücke bewegten Brennfleck des Laserstrahls auf Fehler hin überprüft werden.

Die über das gesamte Detektionsfeld des Detektors zweidimensional ortsaufgelöst detektierte Strahlung wird nur im Bereich des definierten Detektionsfeldausschnitts bzw. der definierten Detektionsfeldausschnitte ausgewertet. Dazu werden die entsprechenden Messsignale derjenigen Bildpunkte (Pixel) des Detektors, z.B. eines CCD- oder CMOS-Detektors, ausgewertet, die zu dem jeweilig definierten Detektionsfeldausschnitt (Detektionsfeldteilbereich) im Detektionsfeld korrespondieren. Der Detektionsfeldausschnitt stellt im Vergleich zu dem gesamten Detektionsfeld des Detektors einen nur kleinen Teilbereich des Detektionsfelds dar. Dadurch ist der Umfang der jeweils auszuwertenden Datenmengen minimiert, was Zeitvorteile bietet. Es ist auch denkbar, überhaupt nur für einen anhand der vorbekannten Bahnkurve dynamisch mitgeführten Detektionsfeldausschnitt Bilddaten aufzunehmen, wenn die eingesetzte Detektorkamera diese Möglichkeit erlaubt.

Die Steuerdaten für die Bewegung des Laserstrahls, d.h. die Soll-Positionsdaten des Laserstrahls, und/oder die Ist-Positionsdaten des Laserstrahls während des Bearbeitungsprozesses werden vorzugsweise vor dem Beginn des Bearbeitungsprozesses oder in Echtzeit während des Prozesses von einer Steuereinheit des Bearbeitungskopfs an eine Auswerteeinheit zum Auswerten der von dem Detektor zweidimensional ortsaufgelöst detektierten Strahlung übertragen. Der Laserbearbeitungsprozess wird gemäß der Erfindung damit weder für das Detektieren der von den Werkstücken emittierten Strahlung noch für das Auswerten der detektierten Strahlung im jeweilig ausgewählten Detektionsfeldausschnitt unterbrochen. Dies ermöglicht das Erkennen von Fehlern während des Bearbeitungsprozesses in Echtzeit, was fertigungstechnische Vorteile bietet.

Die Steuerdaten oder Ist-Positionsdaten werden vorzugsweise über eine Datenleitung von der Steuereinheit der Laserbearbeitungsvorrichtung an die Auswerteeinheit überspielt. Die Steuerdaten können dabei in einem Speicher der Auswerteeinheit zwischengespeichert oder auch, beispielsweise für repetitive identische Schweißprozesse, dauerhaft abgespeichert werden. Alternativ kann die Auswerteeinheit auch Teil der Steuereinheit der Laserbearbeitungsvorrichtung sein, so dass die Übertragung der Bahninformationen an die Auswerteeinheit durch eine Software erfolgt.

Das Wärmebild einer Schweißnaht, d.h. der erstarrten Schmelze im direkten Anschluss an das flüssige Schmelzbad, kann bekanntlich Aufschluss über die Bindung zwischen den miteinander verschweißten Werkstücken, insbesondere Blechen, geben. Bei einer vollständigen Materialverbindung zwischen den Werkstücken erfolgt die Abkühlung aufgrund der Wärmeleitung in beide Werkstücke vergleichsweise rasch. Liegt ein Bindefehler der Schweißnaht vor, d.h. weist die Schweißnaht einen oder mehrere Bereiche mit einer nicht vollständige Materialverbindung zwischen den Werkstücken auf, so ist der Wärmefluss in die Werkstücke gestört. Die Schweißnaht bleibt daher beim Auftreten eines solchen Bindefehlers länger heiß. Durch eine Auswertung der detektierten (Wärme-)Strahlung im Bereich des Detektionsfeldausschnitts des Detektionsfelds des Detektors kann eine örtliche bzw. zeitliche Wärmeabfuhr in die Werkstücke ermittelt und dadurch Bindefehler der Schweißnaht erkannt werden, da der Wärmegradient der abkühlenden Schweißnaht sich deutlich verändert.

Da normalerweise der Laserstrahl beim Schweißen mit konstanter Geschwindigkeit über die miteinander zu verschweißenden Werkstücke bewegt wird, bildet sich um eine werkstückseitige Laserbearbeitungsfläche ein im Wesentlichen stationäres Temperaturfeld aus. Der zeitliche Verlauf der Wärmeabfuhr in das/die Werkstücke kann daher durch eine ortsaufgelöste Messung bestimmt werden. Eine zweidimensional ortsaufgelöste Messung ermöglicht dabei die Gewinnung von sehr zuverlässigen Messwerten.

Bei einer bevorzugten Variante des erfindungsgemäßen Verfahrens ist zumindest ein Detektionsfeldausschnitt ein Profilschnitt einer sich an ein flüssiges Schmelzbad anschließenden erstarrten Schmelze. In diesem Fall kann zumindest ein Kennwert für die Wärmeabfuhr in der erstarrten Schmelze durch Auswerten der zweidimensional ortsaufgelöst detektierten Strahlung entlang des Profilschnitts der erstarrten Schmelze bestimmt und ein, vorzugsweise experimentell bestimmter, Referenzwert für die Wärmeabfuhr in der erstarrten Schmelze vorgegeben werden.

Ein Fehler an der Schweißnaht wird dann durch Vergleichen des zumindest einen Kennwerts mit dem zumindest einen vorgegebenen Referenzwert erkannt.

Bei einer weiteren bevorzugten Variante wird die detektierte Strahlung entlang von zumindest zwei voneinander beabstandeten, senkrecht oder annähernd senkrecht zur Schweißnaht verlaufenden und als Profilschnitte ausgebildeten Detektionsfeldausschnitten ausgewertet. Einer der beiden Profilschnitte wird vorzugsweise direkt hinter dem Schmelzbad und mindestens ein zweiter in einem definierten Abstand relativ weit entfernt von der Schmelze gewählt. An jedem der beiden Profilschnitte wird die Verteilung der thermischen Strahlung senkrecht zur Schweißnaht ausgewertet, sodass die jeweils heißeste Stelle der Schweißnaht, d.h. das Intensitätsmaximum der detektierten Strahlung, ermittelt werden kann. Diese sichere Detektion der heißesten Stelle erhöht die Zuverlässigkeit der Messung gegenüber der Detektion einzelner Punkte im Verlauf der Schweißnaht deutlich. Zur Auswertung kann aus den Intensitätsmaxima der Strahlung der Profilschnitte ein Quotient berechnet werden. Ein Bindefehler liegt vor, wenn der Quotient einen vorgegebenen Referenzwert über- oder der Kehrwert des Quotienten einen vorgegebenen Referenzwert unterschreitet. Der vorgegebene Referenzwert ist anwendungsspezifisch und muss vorab jeweils experimentell ermittelt werden. Alternativ oder ergänzend kann in analoger Verfahrensweise die Erkennung von Bindefehlern anhand der jeweiligen Profil-Halbwertsbreite erfolgen.

Bei einer weiteren besonders bevorzugten Variante wird die detektierte Strahlung entlang eines im Wesentlichen parallel zur Schweißbahn, bevorzugt auf der Symmetrieachse der Schweißnaht verlaufenden Profilschnitts, ausgewertet. Die Strahlungsintensität entlang dieses Profilschnitts, welche der Pixelhelligkeit bei der Aufnahme z.B. mittels einer Kamera entspricht, hat einen für die Wärmeabfuhr in das Bauteil charakteristischen Verlauf.

So kann ein Kennwert bestimmt werden, indem der (räumliche) Verlauf der Strahlungsintensität entlang des Profilschnitts mit einem modellhaften Verlauf, bevorzugt mit einer Exponentialfunktion, verglichen wird. Der Verlauf der Strahlungsintensität entlang des Profilschnitts kann mit einem mathematischen Modell, beispielsweise einer Exponentialfunktion

$$I = B^*exp(C^*X) - A$$

beschrieben werden, wobei I die Strahlungsintensität, A den Anteil der (homogen angenommenen) Hintergrundstrahlung und X die Position entlang des Profilschnitts bezeichnen und wobei die Anpassungskoeffizienten "B" und "C" für den Wärmetransport in das Werkstück charakteristische Größen darstellen. Beim Auftreten eines Bindefehlers fällt der Koeffizient "B" erhöht aus und der Koeffizient "C" wird deutlich kleiner.

Die Güte der Anpassung der Exponentialfunktion an die Wärmespur der Schweißnaht kann hierbei über ein geeignetes Maß, wie z.B. über die Summe der Fehlerquadrate (sog. Chi-Quadratfehler), beschrieben werden. Bei erfolgreicher Anpassung weist dieser Kennwert für jedes Detektorbild kleine Zahlenwerte auf. Werden in einem Schweißnahtverlauf bzw. in einer zeitlichen Abfolge von Detektorbildern lokal hohe Chi-Quadratfehler ermittelt, so deutet dies auf lokale Störungen der Wärmespur hin, wie z.B. auf ein Loch im Werkstück.

Nach einer bevorzugten Weiterbildung der Erfindung umfasst der zumindest eine Detektionsfeldausschnitt ein flüssiges Schmelzbad der Schweißnaht mit einem Brennfleck des Laserstrahls. Beim Auswerten der im Detektionsfeldausschnitt detektierten Strahlung wird eine Intensitätsverteilung der Strahlung im Detektionsfeldausschnitt bestimmt, wobei anhand der Intensitätsverteilung ein Intensitäts-Minimum Bereich des flüssigen Schmelzbads lokalisiert und ein Fehler an der Schweißnaht anhand der relativen Lage des Intensitätsminimum-Bereichs und/oder anhand der Intensität des lokalisierten Intensitätsminimum-Bereichs erkannt wird.

Bei ortsaufgelöster Detektion der im Bereich der kapillarnahen Schmelze des flüssigen Schmelzbads emittierten Strahlung zeigt sich beim Schweißen am Überlappstoß in der Regel ein Intensitätsmaximum-Bereich der Strahlung, der durch den Laserbrennfleck verursacht wird. Innerhalb des Brennflecks des Laserstrahls kann sich bekanntermaßen ein kleinflächiges Intensitätsminimum befinden, dass die Kapillaröffnung repräsentiert. Unter einem Intensitätsminimum- bzw. Maximumbereich wird ein Bereich verstanden, dessen Strahlungsintensität unter bzw. über der Strahlungsintensität des übrigen flüssigen Schmelzbades liegt. Die nachfolgenden Ausführungen beziehen sich nicht auf das innerhalb des Laserbrennflecks liegende kleinflächige Intensitätsminimum, sondern auf einen in Bezug auf die Bearbeitungsrichtung hinter dem Intensitätsmaximum-Bereich des Laserbrennflecks liegenden, vergleichsweise großflächige Intensitätsminimum-Bereich. Es hat sich gezeigt, dass aus den Eigenschaften dieses Intensitätsminimum-Bereichs auf Schweißfehler geschlossen werden kann.

So kann zum Erkennen eines Bindefehlers der Schweißnaht ein Abstand zwischen einer Hinterkante des Brennflecks des Lasers und einer Vorderkante des lokalisierten Intensitätsminimum-Bereichs mit einem vorgegebenen Grenzabstand verglichen werden. Die Erfinder haben erkannt, dass von einer guten Materialverbindung zwischen den Werkstücken ausgegangen werden kann, wenn sich die Fläche des Intensitätsminimum-Bereichs mit dem Brennfleck des Lasers überschneidet. Löst sich das Intensitätsminimum von dem Brennfleck des Lasers ab, dann deutet dies auf einen Bindefehler der Schweißnaht hin.

Durch eine Auswertung des Abstands einer vorherrschenden Vorderkante des Intensitätsminimum-Bereichs oder einer aus der Form des Intensitätsminimums interpolierten Vorderkante relativ zur Hinterkante des Brennflecks des Lasers kann die Nahtqualität beurteilt, d.h. Fehler an der Schweißnaht erkannt, werden. Bei einer Überschneidung wird von einer Materialverbindung zwischen den Blechen ausgegangen. Bei einem Abstand, der einen definierbaren bzw. definierten Grenzabstand überschreitet, wird ein Bindefehler diagnostiziert. Dieser Grenzabstand wird durch Testschweißungen ermittelt und kann im Einzelfall auch den Wert Null oder negative Werte annehmen, sodass ein Bindefehler sofort mit dem Ablösen des Intensitätsminimums-Bereichs von dem Brennfleck des Laserstrahls erkannt wird.

Bei einer ergänzenden oder alternativen Variante wird ein Bindefehler an der Schweißnaht detektiert, wenn der Intensitätsminimum-Bereich der detektierten Strahlung nicht aufgefunden wird. Das Intensitätsminimum hinter dem LaserBrennfleck ist ein Hinweis auf ein Schmelzbaddefizit aufgrund eines notwendigen Spalts zwischen den Blechen. Dieses Schmelzbaddefizit tritt in Erscheinung, wenn die zunächst getrennten Schmelzen des Ober- und Unterblechs sich hinter der Laser-Bestrahlungsfläche zu einem gemeinsamen Schmelzbad vereinigen. Der Spalt wird in diesem Fall überbrückt und es entsteht eine Materialverbindung zwischen den Blechen. Vereinigen sich die Schmelzen von Ober- und Unterblech jedoch nicht, so ist innerhalb des bekannten Brennflecks des Laserstrahls im Wesentlichen das Strahlungsmaximum und ggf. die bekannte Kapillaröffnung während des Schweißens sichtbar. Das Intensitätsminimum hinter dem Brennfleck des Laserstrahls verschwindet dann, was einen Hinweis auf einen Bindefehler ist. In diesem Fall erstarren die einzelnen Schmelzen von Ober- und Unterblech separat und es entsteht der sogenannte "Falsche Freund".

Bei einer besonders vorteilhaften Variante wird das hier beschriebene Verfahren mit dem weiter oben beschriebenen Verfahren kombiniert. Signale, die während des Schweißprozesses an der flüssigen Schmelze aufgenommen werden, liefern eine Fehlervorhersage und können Veränderungen der Schweißnaht, die sich durch Veränderungen der erstarrenden Schmelze beim Abkühlen ergeben, naturgemäß nicht erfassen. Weitergehende Informationen, z.B. über Bindefehler, werden gewonnen, indem der Bereich der erstarrten Schmelze im direkten Anschluss an die Schweißung beobachtet wird. Mittels der kombinierten Auswertung wird dabei sofort überprüft, ob ein sich in der Überwachung der kapillarnahen Schmelze ankündigender Schweißnahtfehler in der abkühlenden Schweißnaht an derselben Stelle auftritt. Durch die Absicherung der Schweißnahtfehlererkennung über eine kombinierte Auswertung geometrischer Merkmale aus der kapillarnahen, flüssigen Schmelze und thermographischer Daten aus der erstarrten Schmelze wird so eine hohe Zuverlässigkeit der Prozessüberwachung erreicht.

Bei einer besonders bevorzugten Variante wird nach dem Erkennen eines Fehlers an der Schweißnaht in den Laserscanner-Schweißprozess eingegriffen, wodurch eine Regelung des Schweißprozesses ermöglicht wird. Hierbei kann Einfluss auf einzelne oder mehrere Schweißparameter wie Schweißgeschwindigkeit, Strahlungsintensität, Spannkräfte etc. genommen werden, um die Qualität der Schweißung zu verbessern.

Zum ortsaufgelösten Detektieren der Strahlung wird ein ortsauflösender Detektor für sichtbare Strahlung, nahes, mittleres oder fernes Infrarot eingesetzt. Vorzugsweise wird u.a. eine CCD-, CMOS-, Diodenarray-, oder InGaAs-Thermo-Kamera oder eine Quotientenpyrometrie-Messapparatur oder auch eine Kombination unterschiedlicher Detektortypen eingesetzt. Die letztgenannte Temperaturmessvorrichtung ermittelt ortsaufgelöst die Temperatur im überwachten Bereich durch die gleichzeitige Messung der emittierten Strahlung bei zwei verschiedenen Wellenlängen. Für das Erkennen von Bindefehlern oder Durchschweißfehlern können wie oben dargestellt zwei Detektionsfeldausschnitte im Detektionsfeld des Detektors herangezogen werden: der Bereich der kapillarnahen, flüssigen Schmelze und der Bereich der erstarrten Schmelze. Bei einem im Detektionsstrahlengang des Scankopfs (z.B. koaxial zum Laserstrahl) angeordneten Detektor können der Bereich der kapillarnahen Schmelze und der Bereich der erstarrten Schmelze der Schweißnaht mit nur einer Kamera umfassend überwacht werden.

Die emittierte Strahlung wird vorzugsweise in einem Wellenlängenbereich im nahen Infrarot, bevorzugt zwischen 1 $\mu$m und 2 $\mu$m, zweidimensional ortsaufgelöst detektiert. Dieser Bereich ist besonders geeignet, um die Wärmestrahlung der erstarrten Schmelze zu erfassen. Strahlung in diesem Wellenlängenbereich kann gleichzeitig auch zur Beobachtung der flüssigen Schmelze herangezogen werden. Es versteht sich, dass insbesondere zur Auswertung der Geometrie des flüssigen Schmelzbades zusätzlich oder alternativ auch Strahlung in anderen Wellenlängenbereichen, z.B. im sichtbaren Bereich, ortsaufgelöst detektiert werden kann.

Die vorstehend genannten und die noch weiter aufgeführten Merkmale können je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    ein Blockschaltbild einer Laserscanner-Schweißvorrichtung, bei der ein Laserstrahl mittels eines Scankopfs entlang einer vorgegebenen Schweißbahn über miteinander zu verschweißende Werkstücke bewegt wird, wobei im Detektionsstrahlengang des Scankopfs ein zum Laserstrahl koaxial ausgerichteter Detektor zum Detektieren von werkstückseitig emittierter Strahlung angeordnet ist;

Fig. 2    eine schematische Darstellung einer Schweißnaht während eines Laserscanner Schweißprozesses mit einem flüssigen Schmelzbad, das einen Intensitätsminimum-Bereich aufweist;

Fig. 3a,b    eine schematische Darstellung eines flüssigen Schmelzbads einer Schweißnaht ohne einen Intensitätsminimum-Bereich (Fig. 3a) bzw. mit einem vom Brennfleck des Laserstrahls abgelösten Intensitätsminimumbereich (Fig. 3b);

Fig. 4    eine zu der Fig. 2 ähnliche Abbildung einer Schweißnaht mit zwei als Profilschnitte senkrecht zur Schweißnaht verlaufenden Detektionsfeldausschnitten;

Fig. 5a,b    schematische Darstellungen der Intensitätsverteilungen der detektierten Strahlung entlang der Profilschnitte von Fig. 4;

Fig. 6    eine schematische Darstellung der Schweißnaht von Fig. 4 mit einem auf einer Symmetrieachse der Schweißnaht verlaufenden Profilschnitt; und

Fig. 7    eine schematische Darstellung der Intensitätsverteilung der detektierten Strahlung in dem Profilschnitt von Fig. 6.

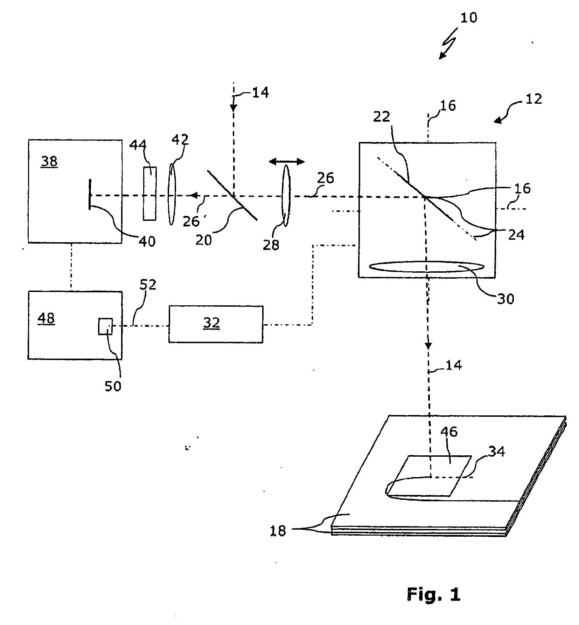

**Fig. 1** zeigt ein Blockschaltbild einer Laserscanner-Schweißvorrichtung **10** mit einem Scankopf **12**, durch den ein von einer nicht näher gezeigten Laserstrahlquelle erzeugter Laserstrahl **14** geführt ist. Der Scankopf 12 ist entlang/um zueinander orthogonal angeordnete Bewegungsachsen **16** gegenüber miteinander zu verschweißenden Werkstücken **18**, hier vorverzinkten Blechen, bewegbar und weist zur Führung und Bündelung des Laserstrahls **14** mehrere optische Bauelemente auf. Ein für den Laserstrahl 14 undurchlässiger Strahlteiler **20** dient dem Umlenken des Laserstrahls in Richtung auf ein kardanisch gelagertes Ablenkmittel **22**, hier einen Scanspiegel, der um zwei zueinander orthogonal angeordnete Schwenkachsen **24** gegenüber den Werkstücken **18** verkippbar ist.

Im Laserstrahlengang **26** ist eine längs des Laserstrahlengangs verschiebbare Justierlinse **28** angeordnete, mittels derer eine Fokuslage des Laserstrahls 14 gegenüber den Werkstücken 18 eingestellt werden kann. Dem Scanspiegel ist eine Fokussieroptik **30** nachgeschaltet.

Der Laserstrahl 14 ist vorliegend auf die Werkstücke 18 gerichtet. Zum Verschweißen der beiden Werkstücke 18 ist der Laserstrahl 14 mittels des verschwenkbar gelagerten Scanspiegels bzw. mittels einer zusätzlich überlagerten (ggf. robotikgestützten) Bewegung des Scankopfs 12 entlang/um dessen Bewegungsachsen 16 über die Werkstücke bewegbar.

Eine programmierbare Steuereinheit **32** dient einem Steuern (bzw. Regeln) der Bewegung des Laserstrahls 14 entlang einer vorgegebenen Schweißbahn **34**, entlang derer eine die Werkstücke 18 verbindende Schweißnaht **36** erzeugt werden soll. Die Steuereinheit 32 dient zudem der Steuerung (bzw. Regelung) weiterer Laserstrahlparameter, wie beispielsweise der Fokuslage und/oder Intensität.

Zur optischen Überwachung des Laserschweißprozesses, d.h. insbesondere zum Erkennen von Fehlern an Schweißnaht 36, ist im oder am Scankopf 12 eine Kamera **38** angeordnet. Die Kamera 38 weist einen (Photo-)Detektor **40**, hier einen CMOS-Chip, auf, der in einem Detektionsstrahlerigang **26'** des Scankopfs 12 angeordnet ist. Wie in Fig. 1 gezeigt, umfasst der Detektionsstrahlengang 26' den Scanspiegel 22 und den Strahlteiler 20. Darüber hinaus umfasst der Detektionsstrahlengang vorliegend die Fokussierlinse 30, eine Abbildungsoptik **42** sowie einen optischen Filter **44**. Der Detektionsstrahlengang 26' fällt somit zwischen der Fokussierlinse 30 und dem Strahlteiler 20 mit dem Laserstrahlengang 26 zusammen.

Der Detektor 40 dient einem zweidimensional ortsaufgelösten Detektieren von werkstückseitig emittierter Strahlung (nicht gezeigt) in einem Wellenlängenbereich im nahen Infrarot. Ein hier rechteckiges Detektionsfeld **46** des Detektors 40 wird bei einer Bewegung des Laserstrahls 14 gegenüber den Werkstücken mit dem Laserstrahl 14 entlang der Schweißbahn 28 synchronisiert mitbewegt. Bei dem hier gezeigten Ausführungsbeispiel ist der Detektor koaxial zum Lasterstrahl ausgerichtet, dieser kann jedoch auch nicht-koaxial zum Lasterstrahl ausgerichtet sein.

Eine mit dem Detektor 40 verbundene Auswerteeinheit **48** mit einem Speicher **50** dient einem Auslesen und Auswerten der im gesamten Detektionsfeld 46 des Detektors 40 zweidimensional ortsaufgelöst detektierten Strahlung. Die Auswerteeinheit 48 ist über eine Datenleitung **52** mit der Steuereinheit 32 verbunden. Die Steuereinheit 32 ist dazu programmiert, Soll-Positionsdaten des Laserstrahls 14, d.h. Steuerdaten, die zur Bewegungssteuerung des Laserstrahls 14 entlang der vorgegebenen Schweißbahn 34 relativ zu den Werkstücken 18 dienen, vorab oder während eines Laserscanner-Schweißprozesses über die Datenleitung 52 an die Auswerteeinheit 48 zu übermitteln. Alternativ kann die Steuereinrichtung auch dazu programmiert sein, bei der Bewegung des Laserstrahls 14 entlang der Schweißbahn 28 jeweilige Positionskoordinaten und/oder Geschwindigkeitsvektoren des Scanspiegels um dessen Schwenkachsen 24 bzw. des Scankopfes 12 um/entlang dessen Bewegungsachsen 16 mittels einer nicht näher gezeigten Sensorik zu erfassen und die dabei gewonnenen Messdaten via der Datenleitung 52 an die Auswerteeinheit 48 (in Echtzeit) zu übermitteln. Diese Steuer- bzw. Messdaten werden jeweils im Speicher 50 der Auswerteeinheit 48 zwischen- bzw. abgespeichert.

Während des Laserschweißprozesses ändert sich die Lage der abkühlenden Schweißnaht 36 im Detektionsfeld 46 des Detektors 40 kontinuierlich aufgrund der Verstellbewegung des Scanspiegels 22 um dessen Schwenkachsen 24 bzw. einer zusätzlich überlagerten Relativbewegung des Scankopfs 12 gegenüber den Werkstücken 18. Ein Auswerten der vom Detektor 40 in dessen gesamten Detektionsfeld 46 detektierten Strahlung zur Überprüfung der Schweißnaht auf Fehler ist aber sehr rechen- und zeitaufwändig.

Aus diesem Grund werden anhand der der im Speicher 50 der Auswerteeinheit 48 gespeicherten Steuer- bzw. Messdaten, d.h. anhand der Soll- oder Ist-Positionsdaten des Laserstrahls 14, die die Lage der Schweißbahn des Lasers beschreiben, ein oder mehrere Schweißnahtprüfbereiche, beispielsweise Profilschnitte der Schweißnaht, im zweidimensionalen Detektionsfeld 46 des Detektors 40 definiert.

Nachfolgend wird die zweidimensional ortsaufgelöst detektierte Strahlung der Werkstücke 18 selektiv in den mittels der Schweißbahninformationen definierten Detektionsfeldausschnitten des Detektionsfelds, d.h. an dazu in Abhängigkeit von der Zeit jeweils räumlich korrespondierenden Bildpunkten des Detektors 40, zum Erkennen von Fehlern an der Schweißnaht 36 ausgewertet.

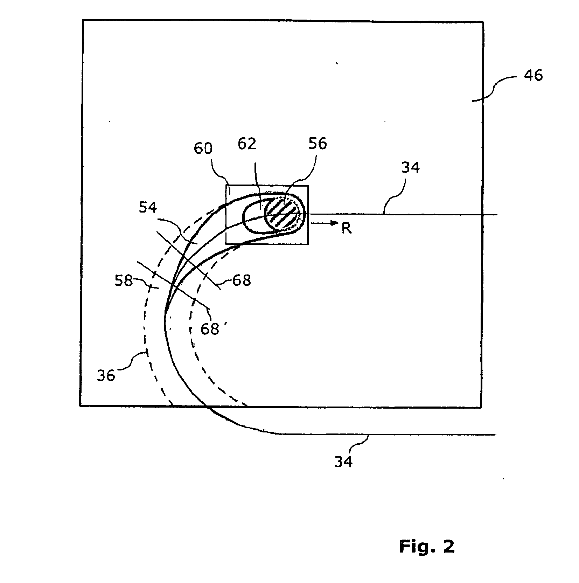

**Fig. 2** zeigt ein flüssiges Schmelzbad **54**, das beim Laserschweißen der Werkstücke (nicht gezeigt) entlang der vorgegebenen Schweißbahn 34 um einen Brennfleck **56** des Laserstrahls herum entsteht, an dem sich eine Dampfkapillare ausbildet. Der Brennfleck 56 des Laserstrahls wird während des Schweißprozesses in Schweißrichtung **R**, welche vorliegend der X-Richtung des XY-Koordinatensystems entspricht, mit konstanter Geschwindigkeit über die miteinander zu verschweißenden Werkstücke bewegt. An das flüssige Schmelzbad 54 schließt sich entgegen der Schweißrichtung R eine erstarrte Schmelze **58** an, welche die Schweißnaht 36 bildet.

Beim Laserschweißen der Werkstücke am Überlappstoß kann es zu Bindefehlern der Schweißnaht 36 zwischen den Werkstücken kommen, bei denen die Schweißnaht 36 von außen betrachtet fehlerfrei aussieht, obwohl zwischen den beiden Werkstücken durch die Schweißnaht 36 keine materialschlüssige Anbindung besteht. Um einen solchen Bindefehler oder auch weitere Fehler in der Schweißnaht zu erkennen, wird anhand der Steuer- bzw. Messdaten zu der Bewegung des Laserstrahls entlang der vorgegebenen Schweißbahn 34, wie in **Fig. 2** gezeigt, ein erster Detektionsfeldausschnitt **60** im Detektionsfeld 46 des Detektors definiert, welcher einen Ausschnitt des flüssigen Schmelzbads 54 mit dem Brennfleck 56 der Laserstrahlung enthält.

Die in dem ersten Detektionsfeldausschnitt 60 des Detektionsfeldes 46 gemessene Strahlungsintensität weist einen Intensitätsmaximum-Bereich innerhalb des Brennflecks 56 des Laserstrahls auf, d.h. die Strahlungsintensität ist dort höher als im umgebenden flüssigen Schmelzbad 54.

Beim Schweißen am Überlappstoß bildet sich in der Regel hinter dem Brennfleck 56 des Laserstrahls ein an diesen angrenzender Intensitätsminimum-Bereich **62** aus. Der Intensitätsminimum-Bereich 62 hinter dem Brennfleck 56 des Laserstrahls ist ein Hinweis auf ein Schmelzbaddefizit aufgrund eines Spalts zwischen den Werkstücken. Dieses Schmelzbaddefizit tritt in Erscheinung, wenn die Schmelzen des oberen und des unteren Werkstücks sich hinter dem Brennfleck 56 des Laserstrahls vereinigen. Der Spalt wird dann überbrückt und es entsteht eine Materialverbindung zwischen den Werkstücken.

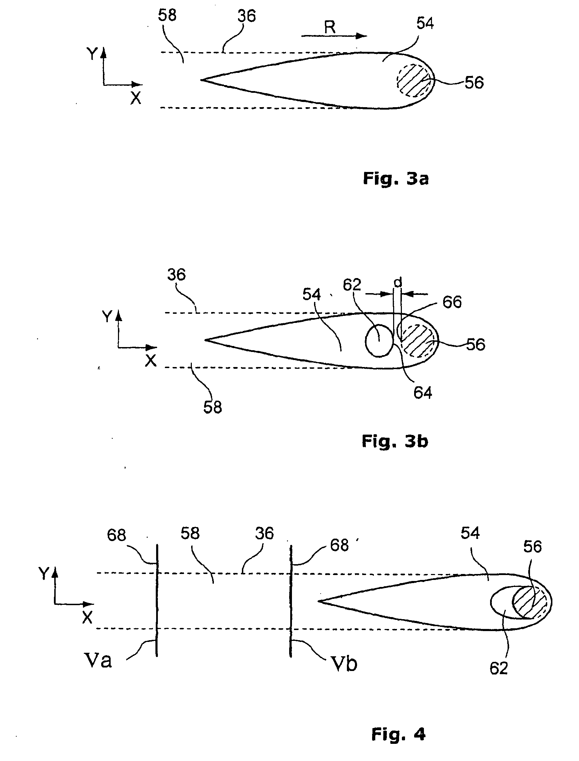

Vereinigen sich die Schmelzen der Werkstücke 18 nicht, so ist im Wesentlichen nur der Brennfleck 56 mit dem Strahlungsmaximum und ggf. die Kapillaröffnung während des Schweißprozesses sichtbar und der Intensitätsminimum-Bereich hinter dem Brennfleck verschwindet insgesamt, wie in **Fig. 3a** gezeigt. Ist dies der Fall, so ist davon auszugehen, dass ein Bindefehler an der Schweißnaht 36 vorliegt.

Von einer guten Materialverbindung zwischen den Werkstücken kann weiterhin ausgegangen werden, wenn sich der Intensitätsminimum-Bereich 62 mit dem Brennfleck 56 überschneidet, wie in Fig. 2 gezeigt. Löst sich der Intensitätsminimum-Bereich 56 hingegen von dem Brennfleck 56 räumlich ab, wie in **Fig. 3b** gezeigt, dann deutet dies auf einen Bindefehler der Schweißnaht 36 hin.

Durch eine Auswertung des Abstands d einer vorherrschenden Vorderkante **64** oder einer aus der Form des Intensitätsminimums 62 interpolierten Vorderkante **64** des Intensitätsminimum-Bereichs 56 relativ zur Hinterkante **66** des Brennflecks 56 kann die Qualität der Schweißnaht 36 beurteilt werden. Bei einem Abstand d, der einen definierten, durch Testschweißungen ermittelten Grenzabstand überschreitet, wird ein Bindefehler diagnostiziert.

Die im flüssigen Schmelzbad 54 während des Schweißprozesses aufgenommenen (Mess-)Signale liefern eine Fehlervorhersage und können Veränderungen der Schweißnaht 36, die sich durch Veränderungen der erstarrten Schmelze 58 beim Abkühlen ergeben, naturgemäß nicht erfassen. Daher kann zusätzlich oder alternativ zur oben beschriebenen Auswertung der vom Schmelzbad 54 emittierten Strahlung in zweiten, in Fig. 2 und **Fig. 4** gezeigten Detektionsfeldausschnitten 68 und 68' die von der erstarrten Schmelze 58 emittierte und zweidimensional ortsaufgelöst detektierte Strahlung ausgewertet werden, um einen oder mehrere Kennwerte für die Wärmeabfuhr in der erstarrten Schmelze 58 zu ermitteln. Durch Vergleich des Kennwerts mit einem vorgegebenen, vorzugsweise experimentell ermittelten, Referenzwert können nachfolgend Fehler in der Schweißnaht ermittelt werden.

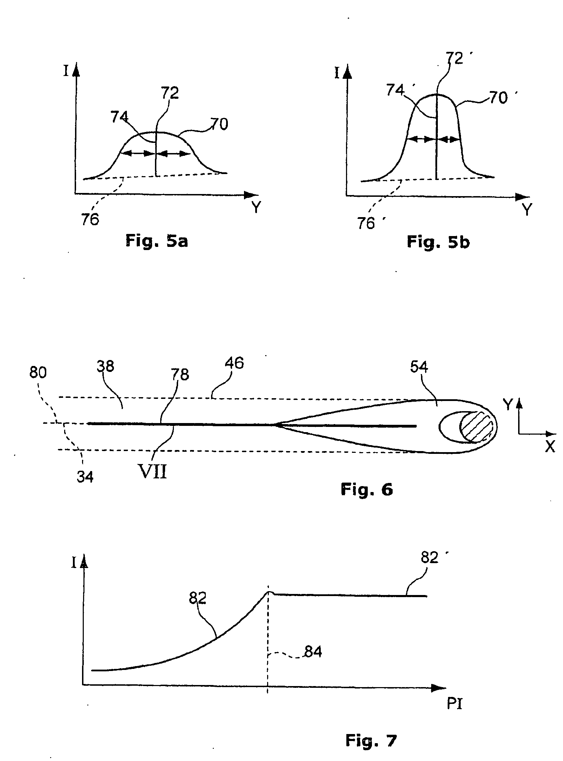

Zwei mögliche Varianten zur Messung und Auswertung der örtlichen bzw. zeitlichen Wärmeabfuhr in das Werkstück sind nachfolgend anhand der Figuren 4 bis 7 beispielhaft erläutert. Die in Fig. 4 und Fig. 6 gezeigten Darstellungen eines linearen Schweißnahtverlaufs ergeben sich, indem die tatsächlich gekrümmte Schweißbahn anhand der Steuer- bzw. Messdaten für die Bewegung des Laserstrahls in eine gerade Bahn umgerechnet wird. Die zweiten Detektionsfeldausschnitte 68, 68' und 78 sind in beiden Fällen als Profilschnitte ausgebildete Schweißnahtprüfbereiche, d.h. eindimensionale Schnitte in der zweidimensionalen Strahlungsverteilung der im Detektionsfeld detektierten Strahlung.

Durch die Beschränkung der Auswertung der gemessenen Strahlung auf einen oder mehrere Profilschnitte an den anhand der vorbekannten Bahnkurve festgelegten Positionen entlang der Schweißnaht 36 kann diese gegenüber einer Auswertung der gesamten zweidimensionalen Verteilung zur Detektion von Schweißnaht-Fehlern signifikant beschleunigt durchgeführt werden, sodass die Auswertung mit reduziertem Rechenaufwand und in Echtzeit erfolgen kann.

Zur Erläuterung der ersten Variante ist in **Fig. 4** die Position von zwei Detektionsfeldausschnitten 68, 68' gezeigt, die Profilschnitte in der erstarrten Schmelze 58 der Schweißnaht 36 sind. Die Detektionsfeldausschnitte 68, 68' verlaufen beispielsweise in einem Abstand von 4,5 mm voneinander senkrecht zur Schweißnaht 36, wobei der erste Detektionsfeldausschnitt 68 verhältnismäßig weit entfernt von dem Schmelzbad 54 und der zweite Detektionsfeldausschnitt 68' fast unmittelbar hinter dem Schmelzbad 54 verläuft.

In **Fig. 5a** und **5b** sind die zugehörigen Intensitätsverteilungen 70, 70' der jeweils detektierten Strahlung entlang der beiden Profilschnitte aufgetragen. Die Strahlungsintensität ist jeweils um ein Maximum **72, 72'** herum im Wesentlichen gaußverteilt, wobei die Halbwertsbreiten der Verteilungen durch Doppelpfeile dargestellt sind. Zur Bestimmung eines Kennwerts für die Wärmeabfuhr zwischen den Profilschnitten kann ein Quotient aus den Maxima 72, 72' der Intensitätsverteilungen gebildet werden. Für die Bestimmung des Kennwerts ist es jedoch in der Regel günstiger, wenn der Quotient aus jeweiligen Profilhöhen **74, 74'** d.h. den Differenzen zwischen den Maxima 72, 72' und den Intensitätskurven der Hintergrundstrahlung **76, 76'** bestimmt wird. Die Intensitätskurven der Hintergrundstrahlung 76, 76' werden hierbei ermittelt, indem der Verlauf der Intensitätsverteilungen 70, 70' der gesamten Strahlung bis zu den Rändern der Gauss-Verteilung verfolgt und diese durch eine Gerade verbunden werden. Hierdurch ist sichergestellt, dass der Anteil der Hintergrundstrahlung 76, 76' für die Bestimmung des Kennwerts nicht berücksichtigt wird.

Zur Ermittlung eines Bindefehlers wird der Quotient mit einem Referenzwert verglichen. Bei vollständiger Bindung zwischen den Werkstücken verläuft die Wärmeabfuhr in die Werkstücke vergleichsweise rasch. Ein Bindefehler zwischen den Werkstücken bewirkt einen langsameren Wärmefluss in die Werkstücke, sodass auf einen solchen Fehler geschlossen werden kann, wenn der berechnete Quotient den Referenzwert über- bzw. der Kehrwert des Quotienten den Referenzwert unterschreitet. Der Referenzwert ist anwendungsspezifisch und wird experimentell ermittelt.

Als alternatives oder wahlweise zusätzliches Merkmal kann die Halbwertsbreite der Profilschnitte ausgewertet werden. Die Halbwertsbreite des zweiten Profilschnitts ist naturgemäß aufgrund der seitlichen Wärmeabfuhr in das Bauteil im Vergleich zum ersten Profilschnitt deutlich breiter. Die Auswertung der Halbwertsbreite erfolgt vorzugsweise wie zuvor beschrieben mittels Quotientenbildung und kann ebenfalls als Beurteilungsmerkmal herangezogen werden.

Aus einer auftretenden Asymmetrie der Intensitätsverläufe 70, 70', die auf eine asymmetrische Wärmeabfuhr in die Bauteile deutet, können darüber hinaus weitere Aussagen über das Schweißnahtergebnis gewonnen werden. Anhand einer asymmetrischen Wärmeabfuhr wird unter Voraussetzung gleicher Blechstärke und - art beim Schweißen einer I-Naht am Stumpfstoß eine fehlerhafte laterale Nahtpositionierung sichtbar. Dieser Fall kann beispielsweise bei Anwendungen im Blechschweißen wie beim Tailored-Blank-, Profil- und Rohr-längs- und -querschweißen auftreten.

Bei der zweiten Mess- und Auswertevariante, welche anhand von **Fig. 6** erläutert wird, wird ein anhand der im Speicher der Auswerteeinheit (Fig. 1) hinterlegten Soll- oder Ist-Positionsdaten des Laserstrahls 14 ein dritter Detektionsfeldausschnitt **78** im Detektionsfeld ausgewertet. Der dritte Detektionsfeldausschnitt 78 ist als einzelner Profilschnitt entlang einer mit der vorgegebenen Schweißbahn 34 zusammenfallenden Symmetrieachse **80** der Schweißnaht 32 ausgebildet. Ein Intensitätsverlauf der entlang des Profilschnitts detektierten Strahlung 82, 82' ist in **Fig. 7** dargestellt.

Die Intensität I entlang dieses Profilschnitts, welche der Pixelhelligkeit eines mit der CMOS-Kamera 38 aufgenommenen Bildes entspricht, hat einen charakteristischen Verlauf, der mit einem mathematischen Modell, beispielsweise einer Exponentialfunktion

$$I=B*exp(C*X) - A \qquad\qquad\qquad (1)$$

beschrieben werden kann. Im vorliegenden Fall sind die Anpassungskoeffizienten "B" und "C" Merkmale für den Wärmetransport in das Werkstück und "A" gibt den Anteil der Hintergrundstrahlung wieder. Beim Auftreten eines Bindefehlers fällt Koeffizient "B" erhöht aus und Koeffizient "C" wird deutlich kleiner. Die Güte der Anpassung der Exponentialfunktion aus Gl. (1) an die Intensitätsverteilung entlang der Symmetrieachse 80 der Schweißnaht 36 in der erstarrten Schmelze 58 detektierten Strahlung **82, 82'** wird über die Summe der Fehlerquadrate in Form des Chi-Quadratfehlers beschrieben. Bei erfolgreicher Anpassung weist dieser Kennwert für jedes Kamerabild kleine Zahlenwerte auf. Werden in einem Schweißnahtverlauf bzw. in der Bildsequenz lokal hohe Chi-Quadratfehler ermittelt, so deutet dies auf lokale Störungen der Wärmespur hin, wie z.B. auf ein Loch im Bauteil.

Es versteht sich, dass bevorzugt eine Auswertung sowohl des ersten Detektionsfeldausschnitts 60 (Fig. 2) und der zweiten Detektionsfeldausschnitte 68, 68' (Fign. 4, 5) auf die oben beschriebene Weise durchgeführt wird. Mittels der kombinierten Auswertung wird dabei sofort überprüft, ob ein sich in der Überwachung des kapillarnahen flüssigen Schmelzbads 54 ankündigender Schweißnahtfehler in der abkühlenden Schweißnaht 36 an derselben Stelle auftritt. Durch die Absicherung der Schweißfehlererkennung über eine kombinierte Auswertung geometrischer Merkmale aus dem kapillarnahen flüssigen Schmelzbad 54 und thermographischer Daten aus der erstarrten Schmelze 58 wird so eine hohe Zuverlässigkeit der Prozessüberwachung erreicht. Auch eine direkte Regelung des Schweißprozesses zur Qualitätssteigerung kann anhand der erhaltenen Messwerte durch Eingriffe in den Schweißprozess, z.B. durch Variation der Strahlstärke oder der Schweißgeschwindigkeit, oder Eingriffe in die Systemtechnik wie Nachführung von Spannkräften vorgenommen werden.

Zur zweidimensional ortsaufgelösten Detektion der emittierten Strahlung können ortsauflösende Detektoren (Fig. 1) für den sichtbaren oder nahen- (vorzugsweise zwischen 1 $\mu$m und 2 $\mu$m Wellenlänge) bis fernen Infrarotbereich eingesetzt werden. Alternativ zur gezeigten CMOS-Kamera können auch CCD-Kameras, Photodiodenarrays, eine InGaAs-Thermo-Kamera oder eine Quotientenpyrometrie-Messapparatur eingesetzt werden. Einsetzbar ist ebenfalls eine Kombination unterschiedlicher Detektorarten.

**Patentansprüche**

1. Verfahren zum Erkennen von Fehlern an einer nicht-linearen Schweißnaht (36) oder einem nicht-linearen Schnittspalt während eines Bearbeitungsprozesses mit einem Laserstrahl (14), der zum Erzeugen der Schweißnaht (36) oder des Schnittspalts mittels eines Bearbeitungskopfs (12) entlang einer vorgegebenen nicht-linearen Schweiß- oder Schneidbahn (34) über die zu bearbeitenden Werkstücke (18) bewegt wird, umfassend die Schritte:

   a) Zweidimensional ortsaufgelöstes Detektieren von werkstückseitig emittierter und/oder reflektierter Strahlung (70, 70', 82, 82') mittels eines Detektors (40), der in oder an dem Bearbeitungskopf (12) angeordnet ist, **gekennzeichnet durch** folgende Schritte:

b) Auswählen zumindest eines Detektionsfeldausschnitts (60, 68, 68', 78) an wechselnden Positionen im Detektionsfeld (46) des Detektors (40)

- anhand von Steuerdaten zum Steuern einer Bewegung des Laserstrahls (14) entlang der vorgegebenen Schneid- oder Schweißbahn (34) oder
- anhand von zuvor ermittelten Ist-Positionsdaten des Laserstrahls (14) entlang der Schweiß- oder Schneidbahn (34), wobei die Ist-Positionsdaten des Laserstrahls (14) aus Positionskoordinaten eines im Bearbeitungskopf (12) angeordneten Ablenkmittels (22) um dessen Schwenkachsen ermittelt werden,

wobei die Ist-Positionsdaten während des Bearbeitungsprozesses in Echtzeit oder die Steuerdaten vor einem Beginn des Bearbeitungsprozesses oder während des Bearbeitungsprozesses in Echtzeit
von einer Steuereinheit (32) des Bearbeitungskopfs (12) an eine Auswerteeinheit (48) übertragen werden, um Aufschluss über die vorgegebene Schweiß- oder Schneidbahn zu geben, entlang derer der Laserstrahl über die zu bearbeitenden Werkstücke bewegt wird, so dass Verlauf der vorgegebenen Schweiß- oder Schneidbahn als Vorwissen für die Auswertung der Detektordaten genutzt wird, und
wobei der Laserbearbeitungsprozess weder für das Detektieren der von den Werkstücken emittierten Strahlung noch für das Auswerten der detektierten Strahlung im jeweilig ausgewählten Detektionsfeldausschnitt (60, 68, 68', 78) unterbrochen wird;
c) Auswerten der zweidimensional ortsaufgelöst detektierten Strahlung (70, 70', 82, 82') im ausgewählten Detektionsfeldausschnitt (60, 68, 68', 78); und
d) Erkennen von Fehlern an der Schnittkante oder der Schweißnaht (36) anhand der im ausgewählten Detektionsfeldausschnitt (60, 68, 68', 78) ausgewerteten Strahlung (70, 70', 82, 82').

2. Verfahren nach Anspruch 1, **dadurch gekennzeichnet, dass** die Steuerdaten des Laserstrahls (14) aus Steuerdaten zum Steuern einer Verschwenkbewegung zumindest eines im Bearbeitungskopf (12) angeordneten Ablenkmittels (22) um dessen Schwenkachsen (24) und/oder zum Steuern einer Relativbewegung des Bearbeitungskopfs (12) und der Werkstücke (18) ermittelt werden.

3. Verfahren nach einem der vorhergehenden Ansprüche, **dadurch gekennzeichnet, dass** der zumindest eine Detektionsfeldausschnitt (68, 68') ein Profilschnitt einer sich an ein flüssiges Schmelzbad (54) einer Schweißnaht (36) anschließenden, erstarrten Schmelze (58) ist, der senkrecht oder annähernd senkrecht zur Schweißnaht (36) verläuft.

4. Verfahren nach dem vorhergehenden Anspruch, **dadurch gekennzeichnet, dass** zwei Detektionsfeldausschnitte (68, 68') als zwei voneinander beabstandete, senkrecht oder annähernd senkrecht zur Schweißnaht (36) verlaufende Profilschnitte gewählt werden, wobei einer der beiden Profilschnitte (68') direkt hinter dem Schmelzbad (54) und ein zweiter (68) in einem definierten Abstand in größerer Entfernung zum Schmelzbad (54) angeordnet ist.

5. Verfahren nach einem der vorhergehenden Ansprüche, **dadurch gekennzeichnet, dass** der zumindest eine Detektionsfeldausschnitt (78) ein Profilschnitt einer sich an ein flüssiges Schmelzbad (54) einer Schweißnaht (36) anschließenden, erstarrten Schmelze (58) ist, der parallel oder annähernd parallel zur Schweißrichtung (R), bevorzugt auf einer Symmetrieachse (80) der Schweißnaht (36) verläuft.

6. Verfahren nach einem der vorhergehenden Ansprüche, **dadurch gekennzeichnet, dass** der zumindest eine Detektionsfeldausschnitt (60) ein flüssiges Schmelzbad (54) mit einem Brennfleck (56) des Laserstrahls (14) umfasst und dass beim Auswerten der detektierten Strahlung im Detektionsfeldausschnitt (60) eine Intensitätsverteilung der detektierten Strahlung über den Detektionsfeldausschnitt (60,78) bestimmt wird,
wobei anhand der Intensitätsverteilung ein Intensitätsminimum-Bereich (62) des flüssigen Schmelzbads (54) im Detektionsfeldausschnitt (60, 68, 68', 78) lokalisiert und ein Fehler an der Schweißnaht (36) anhand einer relativen Lage des Intensitätsminimum-Bereichs (62) zum Brennfleck (56) und/oder anhand der Intensität des lokalisierten Intensitätsminimum-Bereichs (62) erkannt wird oder wobei ein Bindefehler der Schweißnaht bei einem nicht lokalisierbaren (relativen) Intensitätsminimum-Bereich (62) erkannt wird.

7. Laser-Bearbeitungsvorrichtung (10)
mit einem Bearbeitungskopf (12), mittels dessen ein Laserstrahl (14) zum Erzeugen einer nicht-linearen Schweißnaht (36) oder eines nicht-linearen Schnittspalts entlang einer vorgegebenen nicht-linearen Schweiß- oder Schneidbahn (34) über zu bearbeitende Werkstücke (18) bewegbar ist,
mit einer Steuereinheit (32) zur Bewegungssteuerung des Laserstrahls (14) entlang der vorgegebenen Schweiß- oder Schneidbahn (34),

mit einem Detektor (40) zum zweidimensional ortsaufgelösten Detektieren von werkstückseitig emittierter Strahlung (70, 70', 82, 82') innerhalb eines Detektionsfelds (46), und

mit einer Auswerteeinheit (42) zum Auswerten der im Detektionsfeld (40) detektierten Strahlung (70, 70', 82, 82'), **dadurch gekennzeichnet, dass** die Steuereinheit (32) programmiert ist,

- Steuerdaten zum Steuern der Bewegung des Laserstrahls (14) entlang der Schweiß- oder Schneidbahn (34), d.h. Soll-Positionsdaten des Laserstrahls (14), vor einem Beginn des Bearbeitungsprozesses oder während des Bearbeitungsprozesses in Echtzeit an die Auswerteeinheit (48) zu übermitteln oder
- Ist-Positionsdaten des Laserstrahls (14) entlang der Schweiß- oder Schneidbahn (34) aus Positionskoordinaten zumindest eines im Bearbeitungskopf (12) angeordneten Ablenkmittels (22) um dessen Schwenkachsen (24) zu ermitteln und an die Auswerteeinheit (48) während des Bearbeitungsprozesses in Echtzeit

zu übermitteln,

um Aufschluss über die vorgegebene Schweiß- oder Schneidbahn (34) zu geben, entlang derer der Laserstrahl über die zu bearbeitenden Werkstücke (18) bewegt wird, und

wobei die Auswerteeinheit (48) zur Durchführung der folgenden Verfahrensschritte programmiert ist:

- Auswählen zumindest eines Detektionsfeldausschnitts (60, 68, 68', 78) an wechselnden Positionen im Detektionsfeld (46) des Detektors (40) anhand der Steuerdaten zum Steuern einer Bewegung des Laserstrahls (14) entlang der vorgegebenen Schneid- oder Schweißbahn (34) oder anhand der zuvor ermittelten Ist-Positionsdaten des Laserstrahls (14) entlang der vorgegebenen Schweiß- oder Schneidbahn (34), so dass der Verlauf der vorgegebenen Schweiß- oder Schneidbahn (34) als Vorwissen für die Auswertung der Detektordaten genutzt wird;
- Auswerten der zweidimensional ortsaufgelöst detektierten Strahlung (70, 70', 82, 82') im ausgewählten Detektionsfeldausschnitt (60, 68, 68', 78); und
- Erkennen von Fehlern an der Schnittkante oder der Schweißnaht (36) anhand der im ausgewählten Detektionsfeldausschnitt (60, 68, 68', 78) ausgewerteten Strahlung (70, 70', 82, 82').

8. Laser-Bearbeitungsvorrichtung nach dem vorhergehenden Anspruch, die weiterhin aufweist:

zumindest ein verschwenkbar angeordnetes Ablenkmittel (22), mittels dessen ein Laserstrahl (14) entlang einer vorgegebenen Schweiß- oder Schneidbahn (34) über die Werkstücke (18) bewegbar ist,

wobei der Detektor (40) in einem das zumindest eine Ablenkmittel (22) umfassenden Detektionsstrahlengang (26') des Bearbeitungskopfs (12) angeordnet ist.

9. Laser-Bearbeitungsvorrichtung nach Anspruch 7 oder 8, bei der die Steuereinheit (32) programmiert ist, die Soll-Positionsdaten des Laserstrahls (14) aus Steuerdaten zum Steuern einer Verschwenkbewegung zumindest eines im Bearbeitungskopf (12) angeordneten Ablenkmittels (22) um dessen Schwenkachsen (24) und/oder zum Steuern einer Relativbewegung des Bearbeitungskopfs (12) und der Werkstücke (18) zueinander zu ermitteln.

**Claims**

1. Method for detecting defects in a non-linear weld seam (36) or a non-linear cutting gap during a machining process using a laser beam (14) which is moved along a predefined non-linear welding or cutting path (34) over the workpieces (18) to be machined in order to generate the weld seam (36) or the cutting gap by means of a machining head (12), comprising the steps of:

a) detecting, in a two-dimensionally spatially resolved manner, radiation (70, 70', 82, 82') emitted and/or reflected by the workpiece by means of a detector (40) which is arranged in or on the machining head (12), **characterized by** the following steps:
b) selecting at least one detection field section (60, 68, 68', 78) in changing positions in the detection field (46) of the detector (40)

- on the basis of control data for controlling a movement of the laser beam (14) along the predefined cutting or welding path (34) or
- on the basis of previously determined actual-position data of the laser beam (14) along the welding or cutting path (34), wherein the actual-position data of the laser beam (14) are determined on the basis of position coordinates of a deflector means (22) arranged in the machining head (12) about its pivot axes, wherein the actual-position data are conveyed during the machining process in real time or the control data are conveyed before the beginning of the machining process or during the machining process in real time from a control unit (32) of the machining head (12) to an evaluation unit (48) in order to provide information on the predefined welding or cutting path along which the laser beam is moved over the workpieces to be machined so that the course of the predefined welding or cutting path is used as prior knowledge for assessing the detector data, and wherein the laser-machining process is interrupted neither for the detection of radiation emitted by the workpieces nor for evaluating the detected radiation in the respectively selected detection field section (60, 68, 68', 78);

c) evaluating the radiation (70, 70', 82, 82'), detected in a two-dimensionally spatially resolved manner, in the selected detection field section (60, 68, 68', 78); and

d) detecting defects at the cutting edge or the weld seam (36) on the basis of the radiation (70, 70', 82, 82') evaluated in the selected detection field section (60, 68, 68', 78).

2. Method according to claim 1, **characterized in that** the control data of the laser beam (14) are determined on the basis of control data for controlling a pivoting movement of at least one deflector means (22) arranged in the machining head (12) about its pivot axes (24) and/or for controlling a relative movement of the machining head (12) and of the workpieces (18).

3. Method according to one of the preceding claims, **characterized in that** the at least one detection field section (68, 68') is a profile section of a solidified melt (58) which adjoins a liquid weld pool (54) of a weld seam (36) and runs perpendicularly or approximately perpendicularly to the weld seam (36).

4. Method according the preceding claim, **characterized in that** two detection field sections (68, 68') are selected as two profile sections that are spaced apart from one another and run perpendicularly or approximately perpendicularly to the weld seam (36), wherein one of the two profile sections (68') is arranged directly behind the weld pool (54) and a second (68) is arranged at a defined distance further from the weld pool (54).

5. Method according to one of the preceding claims, **characterized in that** the at least one detection field section (78) is a profile section of a solidified melt (58) which adjoins a liquid weld pool (54) of a weld seam (36) and runs parallel or approximately parallel to the weld direction (R), preferably on an axis of symmetry (80) of the weld seam (36).

6. Method according to one of the preceding claims, **characterized in that** the at least one detection field section (60) comprises a liquid weld pool (54) with a focal spot (56) of the laser beam (14) and **in that**, when evaluating the radiation detected in the detection field section (60), an intensity distribution of the detected radiation over the detection field section (60, 78) is determined,
wherein, on the basis of the intensity distribution, a minimum intensity area (62) of the liquid weld pool (54) is located in the detection field section (60, 68, 68', 78) and a defect in the weld seam (36) is detected on the basis of a position of the minimum intensity area (62) relative to the focal spot (56) and/or on the basis of the intensity of the located minimum intensity area (62) or
wherein a fusion defect of the weld seam is detected in a (relative) minimum intensity area (62) that cannot be located.

7. Laser-machining device (10)
having a machining head (12) by means of which a laser beam (14) for producing a non-linear weld seam (36) or a non-linear cutting gap can be moved along a predefined non-linear welding or cutting path (34) over workpieces (18) to be machined,
having a control unit (32) for controlling the movement of the laser beam (14) along the predefined welding or cutting path (34),
having a detector (40) for detecting, in a two-dimensionally spatially resolved manner, radiation (70, 70', 82, 82') emitted by the workpiece within a detection field (46), and having an evaluation unit (42) for evaluating the radiation (70, 70', 82, 82') detected in the detection field (40),
**characterized in that** the control unit (32) is programmed

- to transmit control data for controlling the movement of the laser beam (14) along the welding or cutting path (34), i.e. desired-position data of the laser beam (14), before the beginning of the machining process or during the machining process in real time to an evaluation unit (48) or

- to determine actual-position data of the laser beam (14) along the welding or cutting path (34) on the basis of position coordinates of at least one deflector means (22) arranged in the machining head (12) about its pivot axes (24) and to convey these actual-position data to an evaluation unit (48) during the machining process in real time,

in order to provide information on the predefined welding or cutting path (34) along which the laser beam is moved over the workpieces (18) to be machined, and wherein the evaluation unit (48) is programmed to carry out the following method steps:

- selecting at least one detection field section (60, 68, 68', 78) in changing positions in the detection field (46) of the detector (40) on the basis of the control data for controlling a movement of the laser beam (14) along the predefined cutting or welding path (34) or on the basis of the previously determined actual-position data of the laser beam (14) along the predefined welding or cutting path (34),
so that the course of the predefined welding or cutting path (34) is used as prior knowledge for assessing the detector data;
- evaluating the radiation (70, 70', 82, 82'), detected in a two-dimensionally spatially resolved manner, in the selected detection field section (60, 68, 68', 78); and
- detecting defects at the cutting edge or the weld seam (36) on the basis of the radiation (70, 70', 82, 82') evaluated in the selected detection field section (60, 68, 68', 78).

8. Laser-machining device according the preceding claim, which also has:

at least one pivotably arranged deflector means (22) by means of which a laser beam (14) can be moved along a predefined welding or cutting path (34) over the workpieces (18),
wherein the detector (40) is arranged in a detection beam path (26') of the machining head (12) including the at least one deflector means (22).

9. Laser-machining device according to claim 7 or 8, in which the control unit (32) is programmed to determine the desired-position data of the laser beam (14) on the basis of control data for controlling a pivoting movement of at least one deflector means (22) arranged in the machining head (12) about its pivot axes (24) and/or for controlling a relative movement of the machining head (12) and the workpieces (18) with respect to each other.

## Revendications

1. Procédé de détection de défauts dans une soudure non linéaire (36) ou dans une fente de coupe non linéaire, pendant un processus d'usinage avec un faisceau laser (14) qui est déplacé au moyen d'une tête d'usinage (12) le long d'une trajectoire de soudage ou de coupe (34) au-dessus des pièces à usiner (18) pour produire la soudure (36) ou la fente de coupe, comprenant les étapes suivantes :

a) détection à résolution locale bidimensionnelle d'un rayonnement (70, 70', 82, 82') émis et/ou réfléchi par les pièces au moyen d'un détecteur (40) disposé dans ou sur la tête d'usinage (12),

**caractérisé par** les étapes suivantes :

b) sélection d'au moins une partie de champ de détection (60, 68, 68', 78) à des positions différentes dans le champ de détection (46) du détecteur (40) à l'aide de données de commande destinées à commander un déplacement du faisceau laser (14) le long de la trajectoire de coupe ou de soudage (34) ou à l'aide de données de position réelle préalablement déterminées du faisceau laser (14) le long de la trajectoire de coupe ou de soudage (34), les données de position réelle du faisceau laser (14) étant déterminées à partir de coordonnées de position d'un moyen de déviation (22) disposé dans la tête d'usinage (12) autour de son axe de pivotement, les données de position réelle étant transmises en temps réel pendant le processus d'usinage, ou les données de commande avant un début du processus d'usinage ou en temps réel pendant le processus d'usinage, par unité de commande (32) de la tête d'usinage (12) à une unité d'évaluation (48), pour renseigner sur la trajectoire de soudure ou de coupe prédéterminé, le long de laquelle le faisceau laser est déplacé sur les pièces à usiner, de telle manière que le parcours de la trajectoire prédéterminée de soudure ou de coupure est exploité en tant que connaissance préalable pour l'évaluation des données de détection, et le processus d'usinage au laser n'étant interrompu ni pour la détection du rayonnement émis par les pièces ni pour l'évaluation du rayonnement détecté dans la partie de champ de détection (60, 68, 68', 78) respectivement sélectionnée ;

c) évaluation du rayonnement (70, 70', 82, 82') détecté à résolution locale bidimensionnelle dans la partie de champ de détection (60, 68, 68', 78) sélectionnée ; et

d) détection de défauts sur le bord de coupe ou la soudure (36) à l'aide du rayonnement (70, 70', 82, 82') évalué dans la partie de champ de détection (60, 68, 68', 78) sélectionnée.

2. Procédé selon la revendication 1, **caractérisé en ce que** les données de commande du faisceau laser (14) sont déterminées à partir de données de commande destinées à commander un mouvement de pivotement d'au moins un moyen de déviation (22) disposé dans la tête d'usinage (12) autour de ses axes de pivotement (24) et/ou pour commander un déplacement relatif de la tête d'usinage (12) et des pièces (18).

3. Procédé selon l'une des revendications précédentes, **caractérisé en ce que** ladite au moins une partie de champ de détection (68, 68') est une section de profil d'une masse fondue solidifiée (58) se raccordant à un bain de fusion liquide (54) d'une soudure (36), qui s'étend perpendiculairement ou à peu près perpendiculairement à la soudure (36).

4. Procédé selon la revendication précédente, **caractérisé en ce que** deux parties de champ de détection (68, 68') sont choisies en tant que deux sections de profil espacées l'une de l'autre, s'étendant perpendiculairement ou à peu près perpendiculairement à la soudure (36), une des deux sections de profil (68') étant disposée directement derrière le bain de fusion (54) et une deuxième (68) à une distance définie plus éloignée du bain de fusion (54).

5. Procédé selon l'une des revendications précédentes, **caractérisé en ce que** ladite au moins une partie de champ de détection (78) est une section de profil d'une masse fondue solidifiée (58) se raccordant à un bain de fusion liquide (54) d'une soudure (36), qui s'étend parallèlement ou a peu près parallèlement à une direction de soudage (R), de préférence sur un axe de symétrie (80) de la soudure (36).

6. Procédé selon l'une des revendications précédentes, **caractérisé en ce que** ladite au moins une partie de champ de détection (60) comprend un bain de fusion liquide (54) avec une tache focale (56) du faisceau laser (14) et que lors de l'évaluation du rayonnement détecté dans la partie de champ de détection (60), une distribution d'intensité du rayonnement détecté sur la partie de champ de détection (60, 78) est déterminée, une zone à minimum d'intensité (62) du bain de fusion liquide (54) étant localisée dans la partie de champ de détection (60, 68, 68', 78) à l'aide de la distribution d'intensité et un défaut sur la soudure (36) étant détecté à l'aide d'une position relative de la zone à minimum d'intensité (62) par rapport à la tache focale (56) et/ou à l'aide de l'intensité de la zone à minimum d'intensité (62) localisée ou un défaut de liaison de la soudure étant détecté dans le cas d'une zone à minimum d'intensité (62) (relative) non localisable.

7. Dispositif d'usinage au laser (10) avec une tête d'usinage (12) au moyen de laquelle un faisceau laser (14) peut être déplacé le long d'une trajectoire de soudage ou de coupe (34) non linéaire prédéfinie au-dessus de pièces à usiner (18) pour la production d'une soudure non linéaire ou d'une fente de coupe non linéaire, avec une unité de commande (32) pour commander le déplacement du faisceau laser (14) le long de la trajectoire de soudage ou de coupe (34) prédéfinie, avec un détecteur (40) pour la détection à résolution locale bidimensionnelle d'un rayonnement (70, 70', 82, 82') émis par les pièces à l'intérieur d'un champ de détection (46), et avec une unité d'évaluation (42) pour évaluer le rayonnement (70, 70', 82, 82') détecté dans le champ de détection (40), **caractérisé en ce que** l'unité de commande (32) est programmée pour transmettre à l'unité d'évaluation (48) des données de commande destinées à commander le déplacement du faisceau laser (14) le long de la trajectoire de soudage ou de coupe (34), c.-à-d. des données de position de consigne du faisceau laser (14), avant le début du processus d'usinage ou pendant le processus d'usinage en temps réel, ou pour déterminer, à partir de coordonnées de position d'au moins un moyen de déviation (22) disposé dans la tête d'usinage (12) autour de son axe de pivotement (24), des données de position réelle du faisceau laser (14) le long de la trajectoire de soudage ou de coupe (34) et les transmettre à l'unité d'évaluation (48) en temps réel pendant le processus d'usinage, pour renseigner sur la trajectoire de soudure ou de coupe (34) prédéterminée, le long de laquelle le faisceau laser est déplacé par-dessus les pièces à usiner (18), et l'unité d'évaluation (48) étant programmée pour exécuter les étapes de procédé suivantes :

- sélection d'au moins une partie de champ de détection (60, 68, 68', 78) à des positions différentes dans le champ de détection (46) du détecteur (40) à l'aide de données de commande destinées à commander un déplacement du faisceau laser (14) le long de la trajectoire de coupe ou de soudage (34) prédéterminé ou à l'aide de données de position réelle préalablement déterminées du faisceau laser (14) le long de la trajectoire de coupe ou de soudage (34) prédéterminé, de telle manière que le parcours de la trajectoire de soudure ou de coupe prédéterminée soit exploité en tant que connaissance préalable pour l'évaluation des données de détection ;

- évaluation du rayonnement (70, 70', 82, 82') détecté à résolution locale bidimensionnelle dans la partie de champ de détection (60, 68, 68', 78) sélectionnée ; et

- détection de défauts sur le bord de coupe ou la soudure (36) à l'aide du rayonnement (70, 70', 82, 82') évalué dans la partie de champ de détection (60, 68, 68', 78) sélectionnée.

8.  Dispositif d'usinage au laser selon la revendication précédente, présentant en outre :

au moins un moyen de déviation (22) disposé pivotant, au moyen duquel un faisceau laser (14) peut être déplacé le long d'une trajectoire de soudage ou de coupe (34) prédéfinie au-dessus des pièces (18),

le détecteur (40) étant disposé dans un chemin optique de détection (26') de la tête d'usinage (12) comprenant ledit au moins un moyen de déviation (22).

9.  Dispositif d'usinage au laser selon la revendication 7 ou 8, dans lequel l'unité de commande (32) est programmée pour déterminer les données de position de consigne du faisceau laser (14) à partir de données de commande destinées à commander un mouvement de pivotement d'au moins un moyen de déviation (22) disposé dans la tête d'usinage (12) autour de ses axes de pivotement (24) et/ou à commander un déplacement relatif de la tête d'usinage (12) et des pièces (18).

**Fig. 1**

**Fig. 2**

EP 2 726 244 B1

**Fig. 3a**

**Fig. 3b**

**Fig. 4**

I

74 — 72

70

76

**Fig. 5a**

Y

I

72 ′

74 ′ — 70 ′

76 ′

**Fig. 5b**

Y

80  38  78  46  54

34  VII

Y

X

**Fig. 6**

I

82 ′

82

84

PI

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008145237 A
- WO 2008145237 A1
- DE 102008062866 A1
- DE 102007025463 A1
- DE 102007024510 B3